# EUROPÄISCHE PATENTSCHRIFT

(11) **EP 3 643 847 B1**
(45) Veröffentlichungstag und Bekanntmachung des Hinweises auf die Patenterteilung: **07.06.2023**
(21) Anmeldenummer: 18202230.1
(22) Anmeldetag: 24.10.2018
(51) Int. Cl.: E04B 1/41, F16B 37/04

(54) **BEFESTIGUNGSSYSTEM UND SCHIENE FÜR EIN BEFESTIGUNGSSYSTEM**
FASTENING SYSTEM AND RAIL FOR A FASTENING SYSTEM
SYSTÈME DE FIXATION ET RAIL POUR UN SYSTÈME DE FIXATION

(43) Veröffentlichungstag der Anmeldung: 29.04.2020
(73) Patentinhaber: Leviat GmbH, 40764 Langenfeld (DE); Mannstaedt GmbH, 53840 Troisdorf (DE); Fuchs Schraubenwerk GmbH, 57076 Siegen (DE)
(72) Erfinder: JUSCHKAT, Bastian, 40789 Monheim (DE); HÄUSLER, Frank, 40217 Düsseldorf (DE); PHILIPP, Franz-Dieter, 53773 Hennef (DE); DÜNKEL, Volker, 57074 Siegen (DE); FUCHS, Tillmann, 57072 Siegen (DE)
(74) Vertreter: Reinhardt, Annette

(56) Entgegenhaltungen:
- CA-A- 1 181 921
- CN-A- 108 086 484
- CN-U- 201 778 398
- US-A- 1 667 533
- US-A- 1 936 223
- US-A1- 2016 265 213

## Beschreibung

Die Erfindung betrifft ein Befestigungssystem der im Oberbegriff des Anspruchs 1 angegebenen Gattung.

Aus der US 2010/0101175 A1 ist eine Ankerschiene bekannt, die aus einem schienenförmigen Hohlprofil hergestellt ist. Das Hohlprofil weist zwei parallele und über eine Schienenrückwand miteinander verbundene Schienenwände auf. Die Längsränder der Schienenwände sind aufeinander zu abgekantet und bilden aufeinander zu gerichtete Längsränder. An ihren Stirnseiten weisen die Schienenlippen eine zahnförmige Profilierung auf. Mittels Spezialschrauben können Lasten an der Ankerschiene befestigt werden. Beim Verspannen der Schraube wird deren Kopf gegen die Innenseiten der Längsränder angelegt, wobei ein Zahnprofil des Schraubenkopfes mit den profilierten Stirnseiten der Längsränder der Schiene im Eingriff ist. Nachteile derartiger Ankerschienen bestehen darin, dass insbesondere Querkräfte in Längsrichtung, die von dem zu befestigenden Gegenstand ausgeübt werden, im Wesentlichen über die Längsränder in die Schiene übertragen werden. Dadurch sind die übertragbaren Kräfte vergleichsweise gering.

Ferner offenbart CN 201 778 398 U ein Befestigungssystem mit den Merkmalen des Oberbegriffes des Anspruchs 1.

Der Erfindung liegt die Aufgabe zugrunde, ein Befestigungssystem zu schaffen, das eine einfache Gestaltung besitzt und die Übertragung vergleichsweise hoher Kräfte ermöglicht

Diese Aufgabe wird bezüglich des Befestigungssystems durch ein Befestigungssystem mit den Merkmalen des Anspruchs 1 gelöst.

Das erfindungsgemäße Befestigungssystem umfasst eine Schiene und mindestens eine an der Schiene festzulegende Schraube. Die Schiene besitzt in Längsrichtung der Schiene verlaufende Seitenwände. Die Seitenwände sind über einen Schienenrücken miteinander verbunden. Die Schiene weist einen Längsschlitz zum Zugang des Innenraums auf. Die Schraube weist einen Kopf auf, der zur Anordnung in dem Innenraum der Schiene vorgesehen ist. Die Schiene weist einen Anschlag der Schraube auf, gegen den der Kopf der Schraube verspannbar ist. Die Seitenwände weisen an ihrer dem Innenraum zugewandten Innenseite ein Eingriffsprofil auf. Der Kopf der Schraube weist ein erstes Gegenprofil zum Eingriff in das Eingriffsprofil auf.

Bei der Befestigung der Schraube an der Schiene wird der Schraubenkopf gegen den Anschlag der Schiene verspannt. Der Anschlag bildet dabei ein Gegenlager, das verhindert, dass der Kopf der Schraube durch den Längsschlitz aus dem Innenraum der Schiene gezogen werden kann. In montiertem Zustand der Schraube ist der Kopf der Schraube mit seinem ersten Gegenprofil im Eingriff mit dem Eingriffsprofil der Seitenwände, wodurch Kräfte zwischen der Schraube und der Schiene unmittelbar vom Kopf der Schraube in die Seitenwände übertragen werden können. Durch den Eingriff zwischen dem ersten Gegenprofil und dem Eingriffsprofil können insbesondere an dem Befestigungssystem wirkende Querkräfte zwischen Schraube und Schiene übertragen werden. Dadurch, dass das Eingriffsprofil an den Seitenwänden angeordnet ist, verläuft der Kraftfluss vom ersten Gegenprofil der Schraube direkt in die das Eingriffsprofil tragenden Seitenwände und von dort in die Tragstruktur. Durch den kurzen direkten Kraftfluss in die Seitenwände der Schiene können vergleichsweise hohe Kräfte übertragen werden. Aufgrund der Anordnung des Profils an den Innenseiten der Seitenwände ist die Profilhöhe nicht durch die Höhe der Schienenlippen, sondern nur durch die Höhe des Profils am Kopf der Schraube begrenzt. Um höhere Kräfte übertragen zu können, muss daher lediglich die Höhe des Kopfes der Schraube und die Höhe des Eingriffsprofils angepasst werden.

Vorteilhaft ist das Eingriffsprofil durch Profilelemente gebildet, deren Elementrichtung in einer Seitenansicht auf die Schiene quer, insbesondere senkrecht zur Längsrichtung der Schiene verläuft. Vorteilhaft sind das Eingriffsprofil und das erste Gegenprofil als Zahnprofil ausgebildet. Das Eingriffsprofil und das erste Gegenprofil bilden im Wesentlichen eine in Längsrichtung formschlüssig wirkende Verzahnung, welche unabhängig vom Anzugsmoment der Schraube eine Kraftübertragung zwischen Schraube und Schiene ermöglicht. Wird die Schraube über ihren Kopf gegen die Schiene fest verspannt, so wird der Schraubenkopf an seinem ersten Gegenprofil entlang des Eingriffsprofils gegen den Anschlag der Schiene gepresst. Je fester die Verspannung zwischen Schraube und Schiene ist, desto höhere Reibkräfte können zwischen Schraube und Schiene übertragen werden. Zusätzlich können Kräfte zwischen Schraube und Schiene über die in Längsrichtung formschlüssig wirkende Verzahnung des ersten Gegenprofils und des Eingriffsprofils übertragen werden. Hat der Bediener die Schraube nur gering oder nicht gegen die Schiene verspannt, so können dennoch Querkräfte über die Verzahnung formschlüssig übertragen werden, solange ein Drehen der Schraube verhindert ist.

Es ist vorteilhaft vorgesehen, dass der Kopf der Schraube eine Breite besitzt, die kleiner als die Breite des Längsschlitzes der Schiene ist. Die Breite des Kopfs der Schraube ist dabei der Abstand zweier paralleler Tangentialebenen, die an Längsseiten des Kopfes anliegen. Vorteilhaft ist die Länge des Kopfes größer als die Breite des Längsschlitzes der Schiene. Die Länge des Kopfes ist dabei senkrecht zur Gewindeachse und in montiertem Zustand der Schraube senkrecht zur Längsrichtung der Schiene gemessen. Vorteilhaft besitzt der Kopf eine parallel zur Gewindeachse gemessene Höhe.

Zur Befestigung der Schraube an der Schiene wird die Schraube mit ihrem Kopf voran in Richtung Schienenrücken durch den Längsschlitz der Schiene geschoben. Die Schraube lässt sich vorteilhaft nur dann durch den Schlitz schieben, wenn der Kopf der Schraube mit seiner Länge etwa parallel zum Längsschlitz, also in Längsrichtung der Schiene, ausgerichtet ist. Im Innenraum der Schiene kann der Kopf der Schraube vorteilhaft gedreht werden. Der Kopf der Schraube ist dabei so auszurichten, dass beim Verspannen der Schraube das erste Gegenprofil des Kopfes der Schraube in das Eingriffsprofil der Seitenwände der Schiene eingreift. In dieser Ausrichtung des Kopfes steht der Kopf mit seiner Länge vorteilhaft quer, insbesondere in etwa senkrecht zur Längsrichtung der Schiene. Ein zu befestigender Gegenstand wird vorteilhaft über eine Mutter, die auf das Gewinde der Schraube aufgeschraubt ist, gegen die Tragstruktur, in welcher die Schiene gehalten ist, gespannt. Der zu befestigende Gegenstand kann auch direkt gegen die Schiene gespannt werden. Beim Anziehen der Schraube wird der Kopf der Schraube auf die Schienenlippen zu gezogen. Dabei gleitet der Kopf mit seinem ersten Gegenprofil auf dem Eingriffsprofil der Schiene. Da die Länge des Kopfes größer als die Breite des Längsschlitzes ist, kommt der Kopf beim Anziehen der Schraube an dem Anschlag der Schiene zur Anlage. Die Schraube ist dadurch über ihren Kopf in der Schiene befestigt.

Vorteilhaft besitzt die Schiene einen zu dem Anschlag beabstandeten Montageabschnitt und einen an den Anschlag anschließenden Befestigungsabschnitt. Es ist vorteilhaft vorgesehen, dass die freie Breite des Schieneninnenraums zumindest so groß ist, dass der Kopf der Schraube im Montageabschnitt ausgehend von einer Ausrichtung, in der die Länge des Kopfes parallel zur Breite des Längsschlitzes liegt, um mindestens 45°, vorteilhaft mindestens 70°, insbesondere mindestens 90°, vorteilhaft um 360° um die Gewindeachse gedreht werden kann.

Zur Positionierung der Schraube an der Schiene wird der Kopf so weit in Richtung Schienenrücken bewegt, bis das erste Gegenprofil des Kopfes sich im Montageabschnitt der Schiene befindet. Die freie Breite des Schieneninnenraums im Montageabschnitt ist dabei so groß, dass der Kopf der Schraube um mindestens 45°, vorteilhaft mindestens 70°, insbesondere mindestens 90° um die Gewindeachse gedreht werden kann, ohne dabei die Seitenwände der Schiene zu kontaktieren. In bevorzugter Gestaltung ist die Breite des Montageabschnitts so groß, dass der Kopf der Schraube im Montageabschnitt um 360° um die Gewindeachse gedreht werden kann.

In bevorzugter Gestaltung ist eine in Richtung der Gewindeachse in montiertem Zustand der Schraube gemessene Höhe des Montageabschnitts mindestens so groß wie eine in Richtung der Gewindeachse gemessene Höhe des ersten Gegenprofils. Vorteilhaft ist die gemessene Höhe des Montageabschnitts mindestens so groß wie eine in Richtung der Gewindeachse gemessene Höhe des Schraubenkopfes. Es ist vorteilhaft vorgesehen, dass die senkrecht zur Höhe des Montageabschnitts und senkrecht zur Längsrichtung der Schiene gemessene Breite des Schieneninnenraums im Montageabschnitt an jeder Stelle mindestens so groß ist wie die maximale Länge des Kopfes. Die maximale Länge des Kopfes entspricht dem maximalen Durchmesser des Kopfes ausgehend von der Gewindeachse. Vorteilhaft ist eine parallel zur Breite des Schieneninnenraums im Montageabschnitt gemessene Breite des Schieneninnenraums im Befestigungsabschnitt kleiner als die Länge des Kopfes. Dadurch kann der Kopf der Schraube im Montageabschnitt gedreht werden, bis das erste Gegenprofil des Kopfes und das Eingriffsprofil der Schiene zueinander ausgerichtet sind. Anschließend kann der Schraubenkopf auf die Schienenlippen zu bewegt werden. Befindet sich der Schraubenkopf im Befestigungsabschnitt, so ist ein Drehen des Kopfes um die Gewindeachse nicht mehr möglich. Ist der Kopf der Schraube im Befestigungsabschnitt angeordnet, so können zwischen Schraube und Schiene Kräfte, insbesondere Querkräfte übertragen werden.

In einer besonders vorteilhaften Ausführungsform verlaufen die Innenseiten der Seitenwände zumindest in einem Abschnitt zueinander geneigt, und die Breite des Innenraums vergrößert sich in diesem Abschnitt zum Schienenrücken hin. Es wurde festgestellt, dass bei zueinander geneigt verlaufenden Innenseiten eine vorteilhafte Kraftübertragung von der Schraube über die Schiene in die Tragstruktur erreicht wird und Ausbrüche aus der Tragstruktur vermieden werden können. Vorteilhaft erstreckt sich das Eingriffsprofil bei dieser Ausführungsvariante über die gesamte Höhe des Abschnitts, bevorzugt über die gesamte Höhe der Innenseiten der Seitenwände.

Bei einem Befestigungssystem, bei dem die Breite des Innenraums zumindest in dem Abschnitt zum Schienenrücken hin zunimmt, ist der Abstand zwischen den Eingriffsprofilen der beiden Innenseiten der Seitenwände im Montageabschnitt vorteilhaft so groß, dass der Kopf der Schraube im Montageabschnitt um die Gewindeachse gedreht werden kann, ohne dabei die Eingriffsprofile zu berühren. Die Ausbildung der Eingriffsprofile über die gesamte Höhe der Seitenwände kann eine vereinfachte Fertigung der Schiene ermöglichen. Beim Verspannen der Schraube wird der Kopf vom Montageabschnitt in den Befestigungsabschnitt bewegt, bis der Kopf an den geneigten Innenseiten anschlägt und gegen diese verspannt wird. Dabei sind das erste Gegenprofil der Schraube und das Eingriffsprofil der Schiene im Eingriff. Auch bei großen Fertigungstoleranzen kann durch die zum Längsschlitz hin zulaufenden Innenseiten der Schiene beim Verspannen der Schraube ein Eingriff zwischen dem ersten Gegenprofil und dem Eingriffsprofil gewährleistet werden. Durch große Fertigungstoleranzen bei der Ausbildung der Profilstrukturen kann die Fertigung der Schiene und der Schraube erheblich vereinfacht werden.

Es ist vorteilhaft vorgesehen, dass die Eingriffsprofile der sich zugewandten Innenseiten der Seitenwände in Längsrichtung der Schiene zueinander versetzt angeordnet sind. Vorteilhaft sind die ersten Gegenprofile der Schraube in montiertem Zustand der Schraube in Längsrichtung der Schiene zueinander versetzt angeordnet. Vorteilhaft beträgt der Versatz der Profile in Längsrichtung den halben Abstand zwischen zwei Profilelementen. Ausgehend von einer Ausrichtung der Schraube im Befestigungszustand kann die Schraube vorteilhaft im Montageabschnitt um 180° gedreht werden und wieder im Befestigungsabschnitt montiert werden. Dabei kann die Schraube in Längsrichtung um den halben Abstand zwischen zwei Profilelementen eines Profils in Längsrichtung der Schiene versetzt werden. Das Montageraster ist durch den Versatz der entsprechenden Profile verfeinert, und die Schraube kann an der Schiene in Längsrichtung in geringeren Rasterabständen positioniert werden. Die Geometrie des Profilelementes selber bleibt dabei unverändert. Eine kleinere Ausgestaltung der Profilelemente ist nicht notwendig. So kann erfindungsgemäß das Montageraster zwischen der Schraube und der Schiene reduziert werden, ohne dabei die Festigkeit des Befestigungssystems sowie die zu übertragenden Lasten zwischen der Schraube und der Schiene reduzieren zu müssen.

In einer vorteilhaften Gestaltung weist die Schiene in Längsrichtung der Schiene verlaufende Schienenlippen auf, wobei die Schienenlippen an den Seitenwänden anschließen und dem Innenraum zugewandte Innenseiten besitzen. Vorzugsweise bilden die Schienenlippen den Anschlag für die Schraube zum Verspannen der Schraube an der Schiene. Verlaufen die Innenseiten der Seitenwände zumindest in einem Abschnitt zueinander geneigt und die Breite des Innenraums vergrößert sich in diesem Abschnitt zum Schienenrücken hin, kann der Anschlag auch durch die Seitenwände gebildet sein.

In einer bevorzugten Gestaltung weisen die Schienenlippen an ihren Innenseiten ein Lippenprofil auf. Vorteilhaft weist der Kopf der Schraube ein zweites Gegenprofil zum Eingriff in das Lippenprofil auf. Sind das Lippenprofil und das zweite Gegenprofil im Eingriff, bilden diese eine zusätzliche Verzahnung zwischen Schraube und Schiene. Dadurch können die zu übertragenden Kräfte zwischen Schraube und Schiene erhöht werden. Vorteilhaft ist das Lippenprofil durch Lippenprofilelemente gebildet, deren Lippenprofilrichtung in einer Ansicht in Längsrichtung der Schiene zur Gewindeachse der Schraube in montiertem Zustand geneigt verläuft.

Es ist vorteilhaft vorgesehen, dass die Lippenprofile an den Innenseiten der Schienenlippen in Längsrichtung der Schiene zueinander versetzt angeordnet sind. Bevorzugt sind die zweiten Gegenprofile der Schraube in montiertem Zustand der Schraube in Längsrichtung der Schiene zueinander versetzt angeordnet. Wie bereits oben ausgeführt, kann durch den Versatz der Profile, welcher bevorzugt dem halben Abstand zwischen zwei einzelnen Profilelementen zueinander entspricht, das Montageraster in Längsrichtung der Schiene halbiert werden. Da die Geometrie der einzelnen Profilelemente dabei nicht verändert wird, können weiterhin hohe Lasten zwischen Schraube und Schiene übertragen werden.

In einer bevorzugten, alternativen Gestaltung weisen die Schienenlippen dem Innenraum abgewandte Außenseiten auf, und die Innenseiten der Seitenwände verlaufen senkrecht zu den Außenseiten der Schienenlippen. Vorteilhaft erstreckt sich das Eingriffsprofil nur über einen Teil der Höhe der Innenseite, insbesondere über weniger als 60% der Höhe der Innenseite der Seitenwände. Die Höhe der Innenseite ist parallel zur Gewindeachse in montiertem Zustand der Schraube gemessen. In einer vorteilhaften Ausführungsvariante verlaufen die Innenseiten der Seitenwände parallel zur Gewindeachse der Schraube und/oder parallel zueinander. Vorteilhaft erstreckt sich das Eingriffsprofil der Schiene in dieser Ausführungsvariante an den Innenseiten lediglich über die Höhe des Befestigungsabschnittes und endet am Montageabschnitt. Die Breite des Montageabschnitts ist daher größer als die Breite des Befestigungsabschnitts. Die Breite des Montageabschnitts ist vorteilhaft so bemessen, dass der Kopf der Schraube im Montageabschnitt gedreht werden kann, ohne dass der Kopf der Schraube die Innenseiten der Seitenwände berührt.

Für eine Schiene für ein Befestigungssystem ist vorgesehen, dass die Schiene in ihrer Längsrichtung verlaufende Seitenwände besitzt. Die Seitenwände sind über einen Schienenrücken miteinander verbunden. Die Seitenwände und der Schienenrücken begrenzen mit ihren Innenseiten einen Innenraum der Schiene. Die Schiene weist einen Längsschlitz zum Zugang des Innenraums auf. Die Seitenwände weisen an ihrer dem Schieneninnenraum zugewandten Innenseite ein Eingriffsprofil auf.

Ausführungsbeispiele der Erfindung werden im Folgenden anhand der Zeichnung erläutert. Es zeigen:
- Fig.1: eine schematische Seitenansicht eines Ausführungsbeispiels eines Befestigungssystems,
- Fig. 2: eine schematische Seitenansicht einer Schraube des Befestigungssystems nach Fig. 1,
- Fig. 3: eine ausschnittsweise Darstellung einer alternativen Schraube,
- Fig. 4: eine schematische Seitenansicht der Schraube aus Fig. 2 in Richtung des Pfeils IV in Fig. 2,
- Fig. 5: eine schematische Seitenansicht einer alternativen Schraube mit Versatz der Gegenprofile,
- Fig. 6: eine schematische Seitenansicht der Schiene des Befestigungssystems nach Fig. 1,
- Fig. 7: eine ausschnittsweise Darstellung des Eingriffsprofils nach Fig. 6,
- Fig. 8: eine ausschnittsweise Darstellung eines alternativen Eingriffsprofils der Schiene,
- Fig. 9 bis 11: Seitenansichten des Befestigungssystems nach Fig. 1,
- Fig. 12: eine schematische Seitenansicht der Schraube eines alternativen Befestigungssystems nach Fig.14 mit einem zweiten Gegenprofil,
- Fig. 13: eine schematische Seitenansicht der Schraube in Richtung des Pfeils XIII in Fig. 12,
- Fig. 14 bis 16: schematische Seitenansichten eines alternativen Befestigungssystems
- Fig. 17: eine schematische Seitenansicht einer alternativen Ausführungsform des Befestigungssystems,
- Fig. 18: eine ausschnittsweise Darstellung der Eingriffsprofile des Befestigungssystems der Fig. 17,
- Fig. 19: eine ausschnittsweise Darstellung der Eingriffsprofile einer alternativen Ausführungsform des Befestigungssystems,
- Fig. 20: eine schematische Seitenansicht der Schraube des Befestigungssystems nach Fig. 17,
- Fig. 21: eine schematische Seitenansicht der Schraube in Richtung des Pfeils XIX der Fig. 20,
- Fig. 22: eine schematische Seitenansicht einer alternativen Ausführungsform der Schraube mit durchgängigen Gegenprofilen des Befestigungssystems nach Fig. 17,
- Fig. 23: eine schematische Seitenansicht der Schraube in Richtung des Pfeils XXIII in Fig. 22,
- Fig. 24: eine schematische Seitenansicht des Befestigungssystems nach Fig. 17 in montiertem Zustand,
- Fig. 25: eine schematische Seitenansicht einer alternativen Ausführungsform des Befestigungssystems,
- Fig. 26: eine schematische Seitenansicht der Schraube des Befestigungssystems nach Fig. 25,
- Fig. 27: eine schematische Seitenansicht der Schraube in Richtung des Pfeils XXVII der Fig. 26,
- Fig. 28: eine schematische Seitenansicht des Befestigungssystems nach Fig. 25 in verspanntem Zustand,
- Fig. 29 bis 40: schematische Seitenansichten weiterer alternativer Ausführungsformen der Schiene des Befestigungssystems.

In der nachfolgenden Figurenbeschreibung bezeichnen in allen Figuren gleiche Bezugszeichen einander entsprechende Elemente.

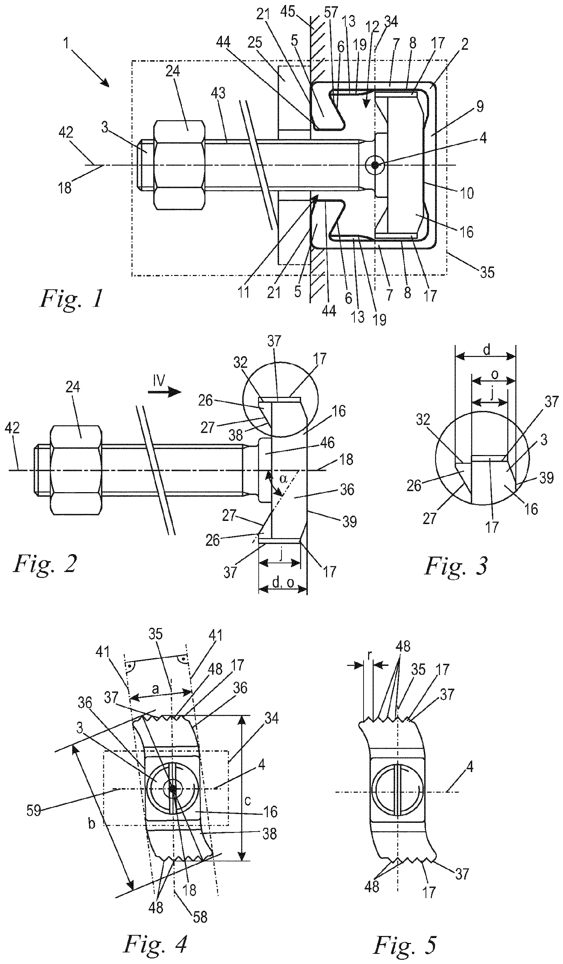

Fig. 1 zeigt eine schematische Seitenansicht eines Ausführungsbeispiels eines Befestigungssystems 1, das eine Schiene 2 und eine Schraube 3 umfasst. Im Ausführungsbeispiel ist die Schraube 3 als Hakenkopfschraube ausgebildet. Die Schiene 2 ist als eine Montageschiene ausgebildet, kann jedoch auch als Ankerschiene ausgeführt sein. Die Schiene 2 ist vorteilhaft zum Eingießen in eine Tragstruktur in Beton vorgesehen. Die Schiene 2 umfasst einen in Längsrichtung 4 verlaufenden Schienenrücken 9. Zur besseren Verankerung im Beton trägt die Schiene 2 vorteilhaft nicht dargestellte Anker an ihrem Schienenrücken 9. An den beiden Längsseiten des Schienenrückens 9 sind Seitenwände 7 angeordnet. Der Schienenrücken 9 und die Seitenwände 7 begrenzen einen Innenraum 12 der Schiene 2. Die Schiene 2 enthält einen Längsschlitz 11, welcher einen Zugang zum Innenraum 12 der Schiene 2 bildet. An den dem Schienenrücken 9 abgewandten Seiten der Seitenwände 7 sind Schienenlippen 5 angeordnet, die von den Seitenwänden 7 ausgehend aufeinander zu ragen. Im Ausführungsbeispiel begrenzen die beiden Schienenlippen 5 den Längsschlitz 11 der Schiene 2.

Wie in Fig. 1 gezeigt, erstreckt sich die Schiene 2 im Wesentlichen in einer Längsrichtung 4, die in der Darstellung in Fig. 1 senkrecht zur Blattebene verläuft. Die Schiene 2 ist im Ausführungsbeispiel symmetrisch zu einer Längsmittelebene 42 ausgebildet, wobei die Längsrichtung 4 parallel zur Längsmittelebene 42 liegt. Eine Längsebene 34 der Schiene 2 verläuft parallel zur Längsrichtung 4 und steht senkrecht zur Längsmittelebene 42. Auch der Schienenrücken 9, die Seitenwände 7 und die Schienenlippen 5 erstrecken sich in Längsrichtung 4 der Schiene 2.

Wie in Fig. 1 gezeigt, sind im Ausführungsbeispiel die Seitenwände 7 parallel zueinander und senkrecht zum Schienenrücken 9 angeordnet. Die Seitenwände 7 bilden mit dem Schienenrücken 9 einen etwa U-förmigen Querschnitt. Auch andere Querschnittsformen der Schiene 2, insbesondere Querschnitte mit gebogenem Verlauf von Schienenrücken 9 und/oder Seitenwänden 7, können jedoch vorteilhaft sein. In besonders vorteilhafter Ausführung sind die Seitenwände 7 zueinander geneigt. Dabei nimmt der senkrecht zur Längsmittelebene 42 gemessene Abstand der Seitenwände 7 zueinander in Richtung zum Schienenrücken 9 hin zu.

Wie Fig. 1 zeigt, ist an der Schraube 3 ein Schraubenkopf 16 ausgebildet. Der Schraubenkopf 16 ist im Innenraum 12 angeordnet und hintergreift die Schienenlippen 5. Die Schraube 3 ragt durch den Längsschlitz 11 der Schiene 2 in den Innenraum 12 der Schiene 2. Die Schraube 3 besitzt ein Gewinde 43 mit einer Gewindeachse 18. Die Gewindeachse 18 der Schraube 3 steht senkrecht zur Längsebene 34. Dabei liegt die Gewindeachse 18 in einer Querebene 35, welche senkrecht zur Längsmittelebene 42 und senkrecht zur Längsebene 34 steht.

Wie Fig. 1 zeigt, weisen die Schienenlippen 5 jeweils eine dem Innenraum abgewandte Außenseite 21 und eine dem Innenraum 12 zugewandte Innenseite 6 auf. Die Schienenlippen 5 weisen jeweils eine Stirnseite 44 auf, wobei die beiden Stirnseiten 44 zwischen sich den Längsschlitz 11 begrenzen. Die Außenseiten 21, die Innenseiten 6 sowie die Stirnseiten 44 der Schienenlippen 5 erstrecken sich in Längsrichtung 4 der Schiene 2. In vorteilhafter Ausführung sind beide Schienenlippen 5 spiegelsymmetrisch zur Längsmittelebene 42 ausgebildet.

Wie Fig. 1 zeigt, ist an den Innenseiten 8 der Seitenwände 7 jeweils ein Eingriffsprofil 13 angeordnet. Das Eingriffsprofil 13 erstreckt sich in Längsrichtung 4 der Schiene 2. Zudem erstreckt sich das Eingriffsprofil 13 in Richtung von der Innenseite 6 der Schienenlippe 5 zum Schienenrücken 9. Das Eingriffsprofil 13 ist durch Profilelemente 19 gebildet, deren Elementrichtung quer, insbesondere senkrecht zur Längsebene 34 verläuft. In vorteilhafter Ausführung verläuft die Elementrichtung der Profilelemente 19 parallel zur Querebene 35. Im Ausführungsbeispiel verläuft die Elementrichtung der Profilelemente 19 in etwa senkrecht zur Längsebene 34. Das Eingriffsprofil 13 erstreckt sich nur über einen Teil der Innenseite 8 der Seitenwände 7. Das Eingriffsprofil 13 ist vorzugsweise als ein Zahnprofil ausgebildet.

In Fig. 2 ist eine Seitenansicht der Schraube 3 gezeigt. Der Schraubenkopf 16 der Schraube 3 ist in Richtung der Gewindeachse 18 durch eine dem Gewinde 43 abgewandte Kopfoberseite 39 und durch eine Auflageseite 38, von der aus sich das Gewinde 43 der Schraube 3 erstreckt, begrenzt. Die Auflageseite 38 und die Kopfoberseite 39 sind über Längsseiten 36 und Stirnseiten 37 des Schraubenkopfes 16 miteinander verbunden. An den Stirnseiten 37 des Schraubenkopfes 16 ist jeweils ein erstes Gegenprofil 17 ausgebildet, welches sich im Ausführungsbeispiel über die gesamte Stirnseite 37 des Schraubenkopfes 16 erstreckt. Das erste Gegenprofil 17 weist Profilelemente 48 auf, deren Elementrichtung parallel zur Gewindeachse 18 verläuft.

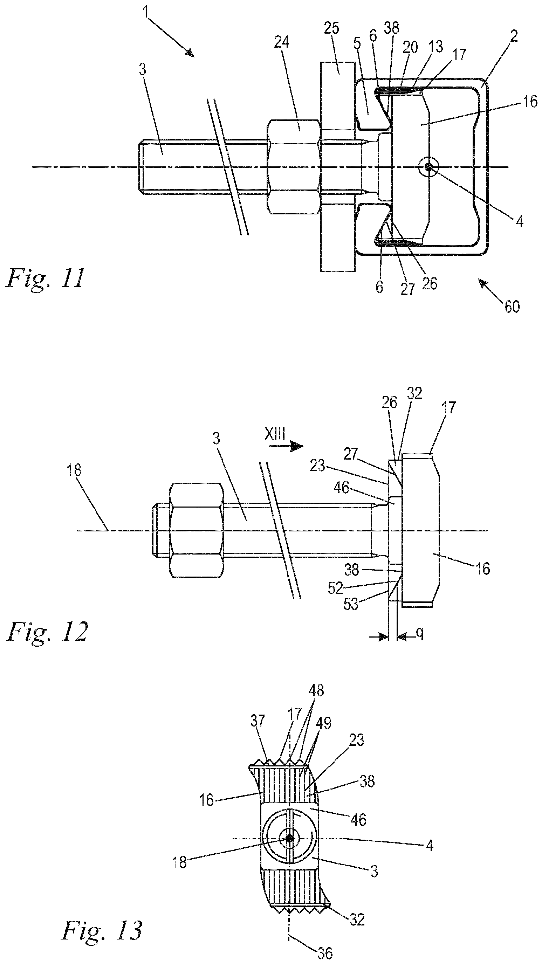

In Fig. 11 ist die Befestigungsvorrichtung 1 in verspanntem Zustand 60 gezeigt. Im verspannten Zustand 60 wird ein zu befestigender Gegenstand 25 gegen die Tragstruktur 45 und/oder gegen die Schiene 2 verspannt. Der Gegenstand 25 wird über eine Mutter 24, welche auf die Schraube 3 aufgeschraubt ist, gegen die Tragstruktur 45 und/oder gegen die Schiene 2 verspannt. Dabei hintergreift der Schraubenkopf 16 im Innenraum 12 angeordnet die Schienenlippen 5. Dabei können über die Schraube 3 Kräfte in allen Raumrichtungen auf die Schiene 2 übertragen werden. Die Auflageseite 38 des Schraubenkopfes 16 liegt an den Innenseiten 6 der Schienenlippen 5 an. Zudem sind an dem Schraubenkopf 16 Haken 26 ausgebildet, welche hinter die Schienenlippen 5 greifen. Durch die Haken 26 wird eine Zentrierung der Schraube 3 beim Verspannen mit der Schiene 2 erreicht. Die auf die Schraube 3 wirkenden Zugkräfte werden über die Auflageseite 38, welche mit der Innenseite 6 der Schienenlippe 5 in Kontakt steht, übertragen. Das Eingriffsprofil 13 ist mit dem ersten Gegenprofil 17 im Eingriff. Die Profilelemente 19 des Eingriffsprofils 13 sind parallel zu den Profilelementen 48 des ersten Gegenprofils 17 ausgerichtet und bilden eine Verzahnung 20. Die Verzahnung 20 ist eine formschlüssige Verbindung zwischen den Profilelementen 19 des Eingriffsprofils 13 und den Profilelementen 48 des ersten Gegenprofils 17. Durch die Verzahnung 20 zwischen Schraube 3 und der Schiene 2 können insbesondere an der Schraube 3 wirkende Querkräfte auf die Schiene 2 übertragen werden.

In Fig. 2 ist eine Seitenansicht der Schraube 3 gezeigt. Die an der Auflageseite 38 des Schraubenkopfes 16 ausgebildeten Haken 26 weisen jeweils eine Hakenunterseite 27 auf, wobei jede Hakenunterseite 27 in verspanntem Zustand 60 des Befestigungssystems mit der Längsmittelebene 42 einen Winkel α einschließt. Der Winkel α ist in Richtung zur Auflageseite 38 des Schraubenkopfes 16 geöffnet und beträgt vorteilhaft 20° bis 70°. Im Ausführungsbeispiel ist ein Winkel α von 50° bis 60° vorgesehen. Der Haken 26 besitzt eine Hakenaußenseite 32, welche Teil der Stirnseite 37 des Schraubenkopfes 16 der Schraube 3 ist. Im Ausführungsbeispiel erstreckt sich das erste Gegenprofil 17 über die gesamte Stirnseite 37 des Schraubenkopfes 16 der Schraube 3 und damit auch entlang der Hakenaußenseite 32 des Hakens 26. Das erste Gegenprofil 17 besitzt eine in Richtung der Gewindeachse 18 der Schraube 3 gemessene Höhe j. Der Schraubenkopf 16 der Schraube 3 besitzt eine in Richtung der Gewindeachse 18 gemessene Höhe d, welche mindestens so groß ist wie die Höhe j des ersten Gegenprofils. Zudem besitzt der Schraubenkopf 16 eine Montagehöhe o, wobei die Montagehöhe der in Richtung der Gewindeachse 18 gemessenen maximalen Entfernung zwischen dem ersten Gegenprofil 17 und der Kopfoberseite 39 entspricht. An der der Kopfoberseite 39 gegenüberliegenden Seite des Schraubenkopfes 16 ist ein Vierkantabschnitt 46 ausgebildet. Der Vierkantabschnitt 46 des Schraubenkopfes 16 ist in etwa quadratisch, wobei durch den Mittelpunkt des Vierkantabschnittes 46 die Gewindeachse 18 der Schraube 3 verläuft.

In Fig. 3 ist eine alternative Ausführungsform des ersten Gegenprofils 17 gezeigt. In dieser Ausführungsform ist das erste Gegenprofil 17 ebenfalls an der Stirnseite 37 des Schraubenkopfes 16 der Schraube 3 ausgebildet, wobei sich das erste Gegenprofil 17 lediglich von der Kopfoberseite 39 bis zum Haken 26 der Schraube 3 erstreckt. An der Hakenaußenseite 32 ist kein Profil ausgebildet.

Fig. 4 ist eine Seitenansicht der Schraube 3 in Richtung der Auflageseite 38. Der Schraubenkopf 16 besitzt eine Länge c, welche dem Abstand der ersten Gegenprofile 17 an den zwei Stirnseiten 37 des Schraubenkopfes 16 entspricht. Die Länge c ist in verspanntem Zustand 60 des Befestigungssystems in einer Kopflängsrichtung 58, also parallel zur Querebene 35 und senkrecht zur Längsmittelebene 42 der Schiene 2, gemessen. Der Schraubenkopf 16 besitzt eine Kopfquerrichtung 59, welche senkrecht zur Gewindeachs 18 und senkrecht zur Kopflängsrichtung 58 verläuft. Der Schraubenkopf 16 besitzt eine maximale Länge b. Die Länge b entspricht dem Durchmesser eines gedachten Rotationskörpers, welcher bei einer Rotation des Schraubenkopfes 16 um die Gewindeachse 18 entsteht. Die maximale Länge b ist mindestens so groß wie die Länge c des Schraubenkopfes 16. Der Schraubenkopf 16 der Schraube 3 besitzt eine Breite a, die dem Abstand zweier Tangentialebenen 41 entspricht. Die Tangentialebenen 41 liegen jeweils an einer Längsseite 36 des Schraubenkopfes 16 in mindestens zwei Punkten an dem Schraubenkopf 16 an und verlaufen zueinander parallel. Die Tangentialebenen 41 verlaufen parallel zur Gewindeachse 18. Die Breite a entspricht damit der Mindestbreite eines Schlitzes, durch den der Schraubenkopf 16 ohne Verkippen hindurchgesteckt werden kann.

Wie in Fig. 4 gezeigt, erstreckt sich das erste Gegenprofil 17 im Ausführungsbeispiel über die gesamte Stirnseite 37 des Schraubenkopfes 16. Die ersten Gegenprofile 17 sind im Ausführungsbeispiel als Zahnprofile ausgebildet, wobei ein einzelnes Profilelement 48 jeweils einem Zahn entspricht. Die Stirnseiten 37 sind im Ausführungsbeispiel zur Gewindeachse 18 achsensymmetrisch ausgebildet. Die Längsseiten 36 des Schraubenkopfes 16 verlaufen in Längsrichtung 4 zueinander parallel. Im Ausführungsbeispiel sind die Längsseiten 36 derart ausgebildet, dass die Form des Schraubenkopfs 16 einem an der Querebene 35 gespiegelten S entspricht. Die ersten Gegenprofile 17 an den Stirnseiten 37 sind in Längsrichtung 4 zueinander versetzt angeordnet. Die Profilelemente 48 der beiden ersten Gegenprofile 37 sind jedoch nicht zueinander versetzt, so dass die Querebene 35 die ersten Gegenprofile 17 jeweils mittig in einem Profilelement 48 schneidet. Wie Fig. 4 zeigt, sind die ersten Gegenprofile 17 in Längsrichtung 4 um zwei volle Profilelemente 48 zueinander versetzt. Die Schraube 3 kann ausgehend von dem verspannten Zustand 60 des Befestigungssystems 1 in Richtung der Gewindeachse 18 verschoben, um 180° gedreht werden und wieder verspannt werden, ohne dabei in Längsrichtung 4 versetzt zu werden.

In Fig. 5 ist eine alternative Ausführungsform des Schraubenkopfes 16 gezeigt. Die ersten Gegenprofile 17 des Schraubenkopfes 16 sind bei diesem Ausführungsbeispiel um 0,5 Profilelemente 48 in Längsrichtung 4 zueinander versetzt. Die Querebene 35 schneidet das eine erste Gegenprofil 17 mittig in einem Profilelement 48 und das andere erste Gegenprofil 17 zwischen zwei Profilelementen 48. Die Profilelemente 48 besitzen eine Breite r. Die Breite r eines Profilelementes 48 entspricht dem in Längsrichtung 4 gemessenen Abstand zwischen zwei Profilelementen 48. Sind die Eingriffsprofile 13 der Schiene 2 in Längsrichtung 4 ebenfalls um die halbe Breite r eines Profielementes 19 versetzt, so kann bei einer Drehung um 180° des Schraubenkopfes 16 der Schraubenkopf 16 in der Schiene 2 um die halbe Breite r eines Profilelementes 48 in Längsrichtung 4 versetzt angeordnet werden. Durch den Versatz der Profilelemente 48 zueinander um die halbe Breite r halbiert sich das Rastermaß des Befestigungssystems 1. Bei der Montage der Schraube 3 an der Schiene 2 kann durch eine 180°-Drehung des Schraubenkopfes 16 die Schraube 3 in Längsrichtung 4 in Schritten der halben Breite r eines Profilelementes 19 positioniert werden.

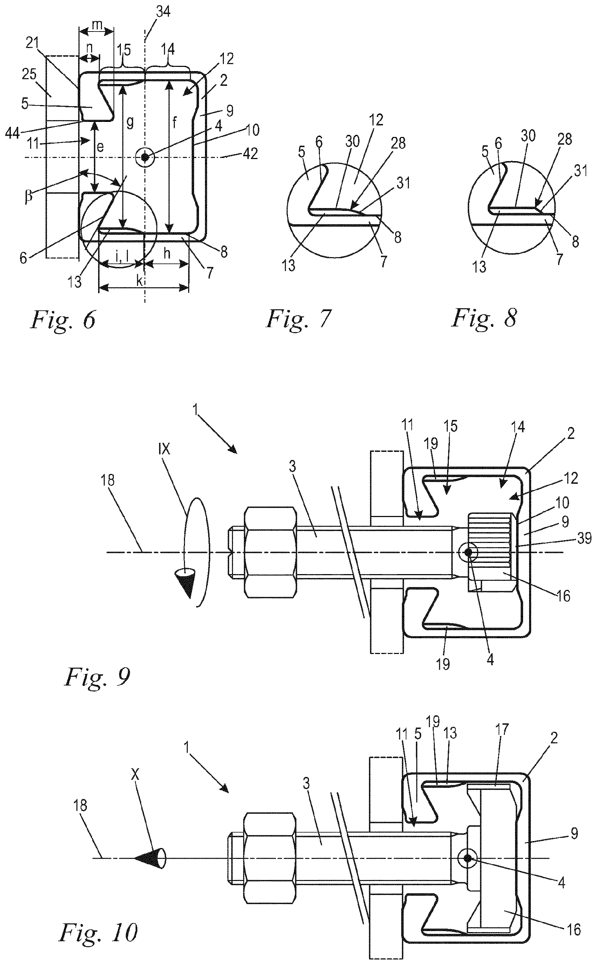

In Fig. 6 ist eine schematische Seitenansicht der Schiene 2 des Ausführungsbeispiels aus Fig. 1 gezeigt. Die Außenseite 21 der Schienenlippe 5 verläuft senkrecht zur Längsmittelebene 42. Die Innenseite 6 der Schienenlippe 5 verläuft geneigt zur Außenseite 21 und schließt mit dieser einen Winkel β ein, welcher vorzugsweise 20° bis 70°, insbesondere 30° bis 40° beträgt. Der Winkel β ist zur Längsmittelebene 42 hin geöffnet. Benachbart zu den Seitenwänden 7 besitzen die Schienenlippen 5 eine Dicke n, die senkrecht zu den Außenseiten 21 der Schienenlippen 5 gemessen ist. Die Schienenlippen 5 besitzen nahe den Stirnseiten 44 eine maximale Dicke m, die deutlich größer als die Dicke n an den Seitenwänden 7 ist. Die maximale Dicke m ist an der dicksten Stelle der Schienenlippe 5 senkrecht zur Außenseite 21 gemessen. Die Stirnseiten 44 der Schienenlippen 5 begrenzen den Längsschlitz 11. Der Längsschlitz 11 besitzt eine Breite e, die dem geringsten senkrecht zur Längsmittelebene 42 gemessenen Abstand zwischen den Stirnseiten 44 der Schienenlippen 5 entspricht.

Wie in Fig. 6 gezeigt, ist der Innenraum 12 der Schiene 2 durch die Innenseiten 6 der Schienenlippen 5, die Innenseiten 8 der Seitenwände 7 und die Innenseite 10 des Schienenrückens 9 begrenzt. Der Innenraum 12 lässt sich in einen Montageabschnitt 14 und in einen Befestigungsabschnitt 15 unterteilen. Der Montageabschnitt 14 liegt dem Anschlag 57 entfernt, und der Befestigungsabschnitt 15 schließt an dem Anschlag 57 an. Der Montageabschnitt 14 ist beabstandet zu dem Abschlag 57 angeordnet. Der Befestigungsabschnitt 15 und der Montageabschnitt 14 erstrecken sich in Längsrichtung 4 der Schiene 2. Im Ausführungsbeispiel entspricht die Höhe l des Befestigungsabschnitts 15 der Höhe i des Eingriffsprofils 13. Die Höhe i des Eingriffsprofils 13 ist in Richtung einer Geraden gemessen, die senkrecht zur Längsebene 34 verläuft. Der Befestigungsabschnitt 15 besitzt eine Breite g, welche dem senkrecht zur Längsmittelebene 42 gemessenen Abstand zwischen den Eingriffsprofilen 13 der Schiene 2 entspricht. Der Montageabschnitt 14 besitzt eine Höhe h, die dem senkrecht zur Längsebene 34 gemessenen Abstand zwischen dem Auslauf des Eingriffsprofils 13 und der Innenseite 10 des Schienenrückens 9 entspricht. Der Montageabschnitt 14 besitzt eine Breite f, welche dem senkrecht zur Längsmittelebene 42 gemessenen Abstand zwischen den Innenseiten 8 der Seitenwände 7 entspricht.

In Fig. 7 ist das Eingriffsprofil 13 der Schiene 2 aus Fig. 4 gezeigt. Das Eingriffsprofil 13 besitzt eine dem Innenraum 12 zugewandte Profiloberseite 30. Die Profiloberseite 30 verläuft ausgehend von der Innenseite 6 der Schienenlippe 5 parallel zur Innenseite 8 der Seitenwand 7. Die Profiloberseite 30 ist über einen Profilabschnitt 28 mit einer Profilflanke 31 des Eingriffsprofils 13 verbunden. Das Eingriffsprofil 13 endet mit der in die Innenseite 8 der Seitenwand 7 verlaufenden Profilflanke 31. Im Ausführungsbeispiel ist der Profilabschnitt 28 als eine Rundung ausgebildet. Im alternativen Ausführungsbeispiel der Fig. 8 ist der Profilabschnitt als eine Kante ausgebildet.

In den Figuren 9 bis 11 sind die verschiedenen Montageschritte des Befestigungssystems 1 der Fig. 1 dargestellt.

Zur Fixierung der Schraube 3 an der Schiene 2 ist die Schraube 3 mit dem Schraubenkopf 16 durch den Längsschlitz 11 der Schiene 2 zu führen. Die Schraube 3 ist dabei so auszurichten, dass die Breite a des Schraubenkopfes 16 parallel zur Breite e des Längsschlitzes 11 der Schiene 2 verläuft. Die Breite a des Schraubenkopfes 16 ist kleiner als die Breite e des Längsschlitzes 11. Daher kann der Schraubenkopf 16 durch den Längsschlitz 11 in den Innenraum 12 der Schiene 2 geführt werden.

Die Schraube 3 ist in Richtung zum Schienenrücken 9 zu bewegen, bis der Schraubenkopf 16 über seine gesamte Montagehöhe o vollständig im Montageabschnitt 14 des Innenraums 12 liegt. Wie in Fig. 9 durch den Pfeil IX angedeutet, ist die Schraube 3 zur Fixierung in der Schiene 2 zunächst um die Gewindeachse 18 zu drehen. Dabei ist die Schraube 3 von einer Ausrichtung, in welcher die Kopfquerrichtung 59 des Schraubenkopfes 16 senkrecht zur Längsrichtung 4 der Schiene 2 verläuft, bis zu einer Ausrichtung zu drehen, in der die Kopflängsrichtung 58 des Schraubenkopfes 16 senkrecht zur Längsrichtung 4 der Schiene 2 verläuft, um mindestens 45°, insbesondere mindestens 70°, vorteilhaft mindestens 90°, vorzugsweise mindestens 110° um die Gewindeachse 18 zu drehen. Im Ausführungsbeispiel ist die maximale Länge b des Schraubenkopfes 16 größer als die Breite f des Montageabschnitts 14. Dadurch wird ein Durchdrehen der Schraube um 360° vermieden. In einem alternativen Ausführungsbeispiel ist die maximale Länge b des Schraubenkopfes 16 kleiner als die Breite f des Montageabschnitts 14. Die Höhe h des Montageabschnitts 14 ist größer als die Montagehöhe o des Schraubenkopfes 16 der Schraube 3. Dadurch kann der Schraubenkopf 16 der Schraube 3 im Montageabschnitt 14 vorzugsweise um 360° gedreht werden, ohne die Seitenwände 7 zu kontaktieren.

Um die Schraube 3 in Längsrichtung 4 der Schiene 2 zu fixieren, ist die Schraube 3 entlang der Gewindeachse 18 weg vom Schienenrücken 9 in Richtung der Schienenlippen 5 gemäß dem Pfeil X in Fig. 10 zu bewegen. Dabei ist der Schraubenkopf 16 so ausgerichtet, dass dessen Kopflängsrichtung 59 senkrecht zur Längsrichtung 4 der Schiene verläuft. Bei der Bewegung des Schraubenkopfes 16 hin zu den Schienenlippen 5 kommen die ersten Gegenprofile 17 des Schraubenkopfes 16 mit den Eingriffsprofilen 13 der Schiene 2 in Eingriff.

Fig. 11 zeigt die Anordnung des Befestigungssystems 1 in verspanntem Zustand 60. In verspanntem Zustand 60 befinden sich die Eingriffsprofile 13 und die ersten Gegenprofile 17 in Eingriff miteinander. Liegt der Schraubenkopf 16 an den Schienenlippen 5 an, befinden sich die Eingriffsprofile 13 und die ersten Gegenprofile 17 im Eingriff und bilden eine Verzahnung 20. Über die Mutter 24 wird die Schraube gegen die Schiene 2 verspannt. Dabei kontaktieren die Auflageseiten 38 des Schraubenkopfes 16 die Innenseiten 6 der Schienenlippen 5. Insbesondere über den Kontakt zwischen den Hakenunterseiten 27 der Haken 26 und den Innenseiten 6 der Schienenlippen 5 zentriert sich die Schraube 3 in verspanntem Zustand 60. Die Länge c des Schraubenkopfes 16 ist größer als die Breite e des Längsschlitzes 11 der Schiene 2. Dadurch liegt der Schraubenkopf 16 der Schraube 3 in verspanntem Zustand 60 in Richtung der Gewindeachse 18 an den Schienenlippen 5 der Schiene 2 an und hintergreift die Schienenlippen 5. Die Länge c des Schraubenkopfes 16 der Schraube 3 ist größer als die Breite g des Befestigungsabschnittes 15. Daher sind die ersten Gegenprofile 17 des Schraubenkopfes 16 in Kontakt mit den ersten Eingriffsprofilen 13 der Schiene 2 und stützen die Schraube 3 in Längsrichtung 4 der Schiene 2 gegen die Schiene 2 ab.

In den Figuren 12 bis 16 ist eine alternative Ausführungsform des Befestigungssystems gezeigt. Wie in den Figuren 12 und 13 gezeigt, weist die Schraube 3 ein zweites Gegenprofil 23 an der Auflageseite 38 des Schraubenkopfes 16 auf. Das zweite Gegenprofil 23 erstreckt sich nahe der Hakenaußenseite 32 des Schraubenkopfes 16 in Richtung der Gewindeachse 18 der Schraube 3 bis zu einem Vierkantabschnitt 46 der Schraube 3. Das zweite Gegenprofil 23 weist einen Profilgrund 52 auf, welcher im Ausführungsbeispiel entlang der Hakenunterseite 27 verläuft. Das zweite Gegenprofil 23 weist eine Profiloberseite 53 auf, die senkrecht zur Gewindeachse 18 verläuft. Das zweite Gegenprofil 23 besitzt eine in Richtung der Gewindeachse 18 gemessene Höhe q, welche dem Abstand zwischen der Profiloberseite 53 und dem Profilgrund 52 entspricht. Im Ausführungsbeispiel nimmt die Höhe q ausgehend von der Hakenaußenseite 32 bis zum Vierkantabschnitt 46 der Schraube 3 zu. Das zweite Gegenprofil 23 besteht aus einzelnen Profilelementen 49, deren Elementrichtung in einer Ebene verläuft, welche parallel zu einer von der Gewindeachse 18 und der Kopflängsrichtung 58 des Schraubenkopfes 16 aufgespannten Ebene verläuft.

Vorteilhaft weisen das zweite Gegenprofil 23 und das erste Gegenprofil 17 das gleiche Rastermaß auf. Vorteilhaft liegt die Längsrichtung mindestens eines Profilelementes 48 des ersten Gegenprofils 17 in einer Ebene mit der Längsrichtung eines Profilelementes 49 des benachbarten zweiten Gegenprofils 23. In einer vorteilhaften, nicht gezeigten Ausführung können die zweiten Gegenprofile 23 zu den ersten Gegenprofilen 17 in Längsrichtung 4 versetzt ausgebildet sein.

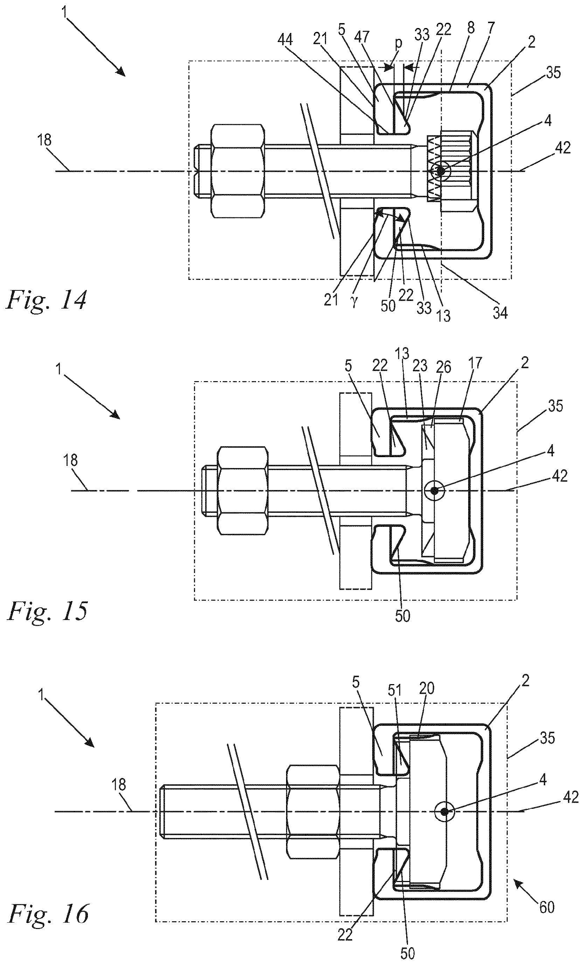

Die Schiene 2 weist an den Schienenlippen 5 jeweils ein Lippenprofil 22 auf, das in den Fig. 14 bis 16 schematisch dargestellt ist. Die Lippenprofile 22 bestehen aus einzelnen Profilelementen 50, deren Elementrichtung parallel zur Querebene 35 verläuft. Wie in Fig. 14 gezeigt, besitzt das Lippenprofil 22 eine Profiloberseite 33, welche sich in Längsrichtung 4 der Schiene 2 erstreckt und mit der Außenseite 21 der Schienenlippe 5 einen Winkel γ einschließt. Der Winkel γ ist zur Längsmittelebene 42 hin geöffnet und beträgt vorteilhaft 20° bis 70°. Im Ausführungsbeispiel ist ein Winkel γ von 30° bis 40° vorgesehen.

Wie in Fig. 14 gezeigt, weist das Lippenprofil 22 einen Profilgrund 47 auf, welcher im Ausführungsbeispiel im Wesentlichen parallel zur Außenseite 21 der Schienenlippe 5 verläuft. Der Profilgrund 47 verläuft im Ausführungsbeispiel senkrecht zur Längsmittelebene 42. Das Lippenprofil 22 besitzt eine senkrecht zur Längsebene 34 gemessene Höhe p, welche dem Abstand zwischen der Profiloberseite 33 und dem Profilgrund 47 entspricht. Im Ausführungsbeispiel nimmt die Höhe p ausgehend von der Innenseite 8 der Seitenwand 7 bis in die Nähe der Stirnseite 44 der Schienenlippen 5 zu.

Wie in den Fig. 14 bis 16 gezeigt, ist das Eingriffsprofil 13 von dem Lippenprofil 22 separat von dem Lippenprofil 22 ausgebildet. Das Eingriffsprofil 13 besitzt das gleiche Rastermaß wie das Lippenprofil 22. Im Ausführungsbeispiel liegt die Lippenelementrichtung mindestens eines Profilelementes 50 des Lippenprofils 5 in einer Ebene mit der Elementrichtung eines Profilelementes 19 des benachbarten Eingriffsprofils 13. In einer vorteilhaften, nicht gezeigten Ausführung können die Lippenprofile 22 zu den Eingriffsprofilen 13 in Längsrichtung 4 versetzt angeordnet sein.

In verspanntem Zustand 60 des Befestigungssystems 1, der in Fig. 16 dargestellt ist, sind die Eingriffsprofile 13 der Schiene 2 im Eingriff mit den ersten Gegenprofilen 17, und die Lippenprofile 22 der Schiene 2 sind im Eingriff mit den zweiten Gegenprofilen 23 des Schraubenkopfes 16 und bilden jeweils eine Verzahnung 20, 51 zwischen Schraube 3 und Schiene 2. Durch die zusätzliche Verzahnung 51 zwischen dem zweiten Gegenprofil 23 und dem Lippenprofil 22 können zwischen Schraube 3 und Schiene 2 höhere Querkräfte, vorzugsweise Querkräfte, die in Längsrichtung 4 der Schiene 2 wirken, übertragen werden.

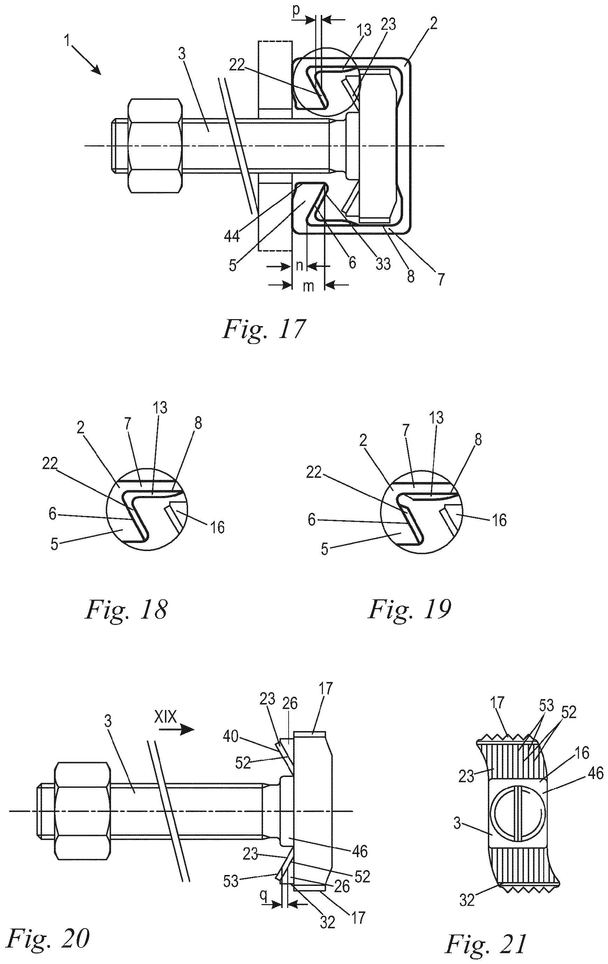

In der Fig. 17 ist ein alternatives Ausführungsbeispiel des Befestigungssystems 1 gezeigt, welches sich von dem Ausführungsbeispiel nach den Figuren 12 bis 16 lediglich in der Ausbildung des zweiten Gegenprofils 23 der Schraube 3 und in der Ausbildung des Lippenprofils 22 der Schiene 2 unterscheidet. Im Ausführungsbeispiel nach Fig. 17 ist die Höhe p des Lippenprofils 22 konstant. Die Dicke n der Schienenlippe 5 hingegen nimmt ausgehend von der Innenseite 8 der Seitenwand 7 bis hin in die Nähe der Stirnseite 44 der Schienenlippe 5 auf eine maximale Dicke m der Schienenlippe 5 zu. Die Profiloberseite 33 des Lippenprofils 22 verläuft parallel zur Innenseite 6 der entsprechenden Schienenlippe 5.

In Fig. 18 ist der Übergang zwischen dem Eingriffsprofil 13 und dem Lippenprofil 22 des Befestigungssystems 1 aus Fig. 17 vergrößert gezeigt. Das Eingriffsprofil 13 und das Lippenprofil 22 sind miteinander verbunden und bilden ein durchgehendes Profil.

Das durchgehende Profil erstreckt sich durchgängig von der Innenseite 8 der Seitenwand 7 über die Innenseite 6 der Schienenlippe 5 bis zu der Stirnseite 44 der Schienenlippe 5. In Fig. 19 ist eine alternative Ausführungsform gezeigt, bei welcher das Eingriffsprofil 13 und das Lippenprofil 22 am Übergang zwischen der Innenseite 8 der Seitenwand 7 und der Innenseite 6 der Schienenlippe voneinander getrennt sind.

In den Figuren 20 und 21 ist die Schraube 3 der alternativen Ausführungsform nach Fig. 17 gezeigt. Die Höhe q des zweiten Gegenprofils 23 ist bei diesem Ausführungsbeispiel im Wesentlichen konstant. Der Profilgrund 52 des zweiten Gegenprofils 23 verläuft parallel zur Profiloberseite 53 des zweiten Gegenprofils 23. An der Hakenaußenseite 32 des Hakens 26 ist kein Profil ausgebildet. Das erste Gegenprofil 17 und das zweite Gegenprofil 23 sind nicht miteinander verbunden.

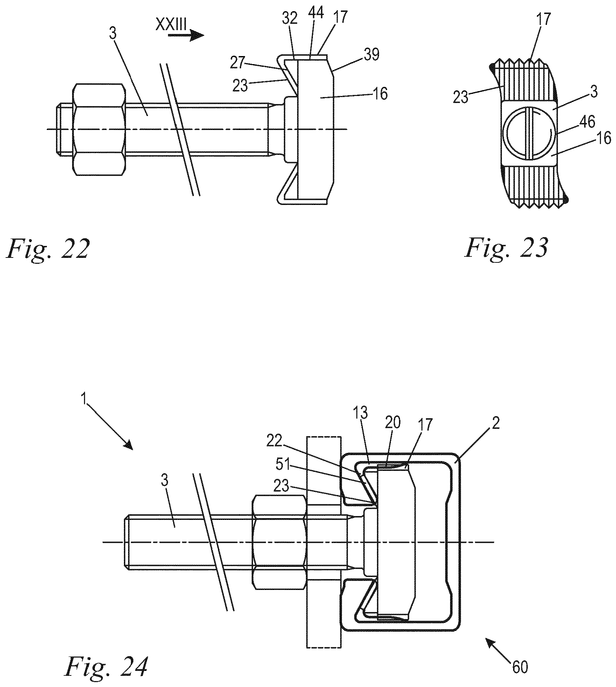

Die Figuren 22 und 23 zeigen eine alternative Ausführungsvariante der Schraube 3, welche sich von der in den Figuren 20 und 21 dargestellten Schraube 3 darin unterscheidet, dass das erste Gegenprofil 17 und das zweite Gegenprofil 23 miteinander verbunden sind. Das erste Gegenprofil 17 erstreckt sich an der Stirnseite 44 des Schraubenkopfes 16 nahe von der Kopfoberseite 39 über die Hakenaußenseite 32 bis zur Hakenunterseite 27 und geht in das zweite Gegenprofil 23 über.

Die Fig. 24 zeigt das Befestigungssystem 1 nach Fig. 17 in verspanntem Zustand 60. Die Eingriffsprofile 13 sind mit den ersten Gegenprofilen 17 im Eingriff und bilden eine Verzahnung 20. Zudem sind die Lippenprofile 22 mit den zweiten Gegenprofilen 23 im Eingriff und bilden eine Verzahnung 51.

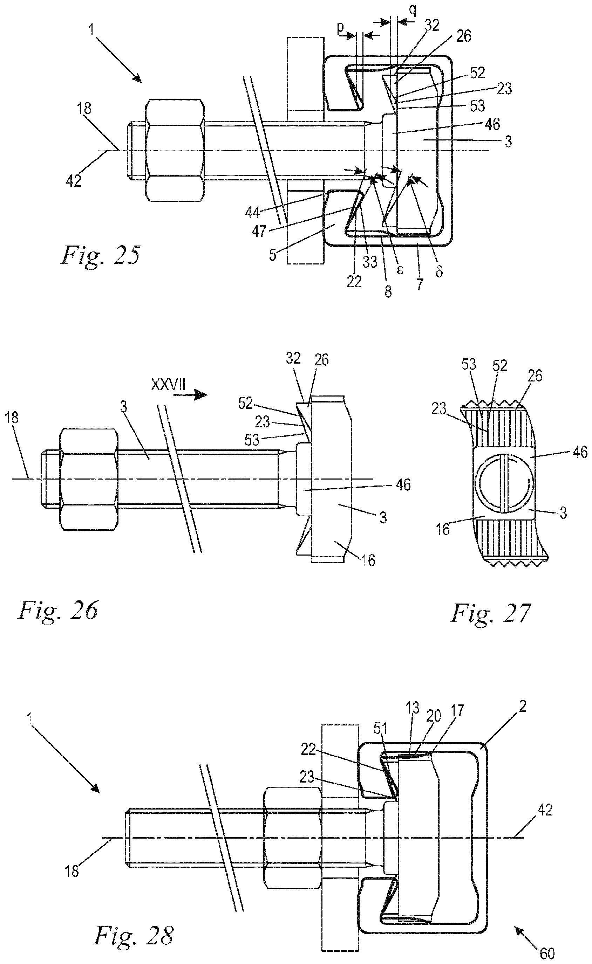

In den Figuren 25 bis 28 ist eine weitere alternative Ausführungsform des Befestigungssystems 1 gezeigt, welches sich von dem in Fig. 17 gezeigten Befestigungssystem 1 lediglich in der Ausbildung des Lippenprofils 22 und des zweiten Gegenprofils 23 unterscheidet. Die Höhe q des zweiten Gegenprofils 23 nimmt ausgehend von der Außenseite 32 des Hakens 26 in Richtung auf den Vierkantabschnitt 46 der Schraube 3 hin zu. Dabei verläuft die Profiloberseite 53 zum Profilgrund 52 des zweiten Gegenprofils 23 unter einem Winkel δ, welcher zur Gewindeachse 18 der Schraube 3 hin geöffnet ist. Der Winkel δ beträgt im Ausführungsbeispiel von 5° bis 25°, vorzugsweise von 5° bis 15°. Demnach ist im Ausführungsbeispiel die Höhe q des zweiten Gegenprofils 23 nahe der Hakenaußenseite 32 kleiner als die Höhe q nahe des Vierkantabschnitts 46. Die Höhe p des Lippenprofils 22 nimmt ausgehend von der Innenseite 8 der Seitenwand 7 in Richtung auf die Stirnseite 44 der Schienenlippe 5 hin zu. Dabei verläuft die Profiloberseite 33 zum Profilgrund 47 des Lippenprofils 22 in einem Winkel ε, welcher zur Längsmittelebene 42 der Schiene 2 hin geöffnet ist. Der Winkel ε beträgt im Ausführungsbeispiel von 5° bis 25°, vorzugsweise von 5° bis 15°. Demnach ist im Ausführungsbeispiel die Höhe p des Lippenprofils 22 nahe der Innenseite 8 der Seitenwand 7 kleiner als die Höhe p des Lippenprofils 22 nahe der Stirnseite 44 der Schienenlippe 5. In Fig. 28 ist das Befestigungssystem 1 nach der Fig. 25 in verspanntem Zustand 60 gezeigt.

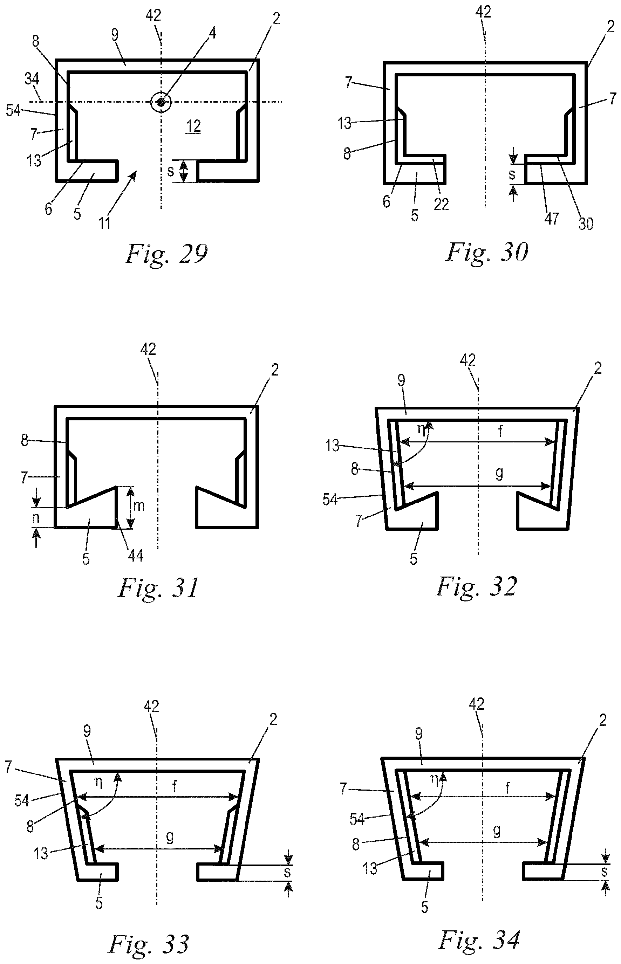

Die Figuren 29 bis 40 zeigen in schematischer Darstellung verschiedene Ausführungsbeispiele der Schiene 2. Weitere vorteilhafte Ausführungsbeispiele können sich durch beliebige Kombination der Merkmale aller Ausführungsbeispiele ergeben.

In Fig. 29 ist ein Ausführungsbeispiel der Schiene 2 schematisch dargestellt. Das Ausführungsbeispiel nach Fig. 29 unterscheidet sich von dem Ausführungsbeispiel der Fig. 1 darin, dass die in Richtung der Gewindeachse 18 gemessene Dicke s der Schienenlippen 5 konstant ist.

In Fig. 30 ist eine Ausführungsvariante der Schiene 2 gezeigt, welche das Eingriffsprofil 13 an den Seitenwänden 7 und das Lippenprofil 22 an den Schienenlippen 5 aufweist. Das Eingriffsprofil 13 und das Lippenprofil 22 sind miteinander verbunden. Das Eingriffsprofil 13 erstreckt sich teilweise über die Innenseite 8 der Seitenwand 7. Das Lippenprofil 22 erstreckt sich über die gesamte Innenseite 6 der Schienenlippe 5. Die Profiloberseite 30 und der Profilgrund 47 des Lippenprofils 22 verlaufen zueinander parallel. Die Schienenlippe 5 weist eine konstante Dicke s auf. Die Seitenwände 7 verlaufen zueinander parallel.

Die alternative Ausführung der Schiene 2 in Fig. 31 unterscheidet sich von der Schiene 2 in Fig. 29 in der Ausbildung der Schienenlippen 5. Die Dicke n der Schienenlippen 5 an den Seitenwänden 7 nimmt bis zu einer maximalen Dicke m an der Stirnseite 44 der Schienenlippe 5 zu. Die maximale Dicke m der Schienenlippe 5 entspricht mindestens der 1,5fachen, insbesondere der 2fachen geringsten Dicke n der Schienenlippe 5 nahe der Innenseite 7 der Seitenwand 8.

Eine besonders vorteilhafte Gestaltung der Schiene 2 ist in Fig. 32 gezeigt. Die Schiene 2 in Fig. 32 besitzt zueinander geneigt verlaufende Seitenwände 7. Die Innenseiten 8 der Seitenwände 7 schließen jeweils mit dem Schienenrücken 9 einen Winkel η ein, welcher zur Längsmittelachse 42 hin geöffnet ist. Der Winkel η beträgt im Ausführungsbeispiel 70° bis 88°, insbesondere 75° bis 85°. Das Eingriffsprofil 13 ist an der gesamten Innenseite 8 der Seitenwand 7 ausgebildet. Die Schienenlippen 5 entsprechen den Schienenlippen 5 nach Fig. 31.

Die Seitenwände 7 der Ausführungsvarianten der Fig. 33 und 34 schließen ebenfalls mit dem Schienenrücken 9 einen Winkel η ein, welcher zur Längsmittelachse 42 hin geöffnet ist. Die Außenseite 54 verläuft parallel zur Innenseite 8 der Seitenwand 7. Die Schienenlippen weisen eine konstante Dicke s auf. In der Fig. 33 erstreckt sich das Eingriffsprofil 13 lediglich über einen Teil, in Fig. 34 über die gesamte Innenseite 8 der Seitenwand 7.

In den Ausführungsvarianten der Fig. 32 bis 34 verlaufen die Außenseite 54 und die Innenseite 8 der Seitenwand 7 parallel zueinander. Die Neigung der Innenseiten 8 der Seitenwände 7 ist so ausgelegt, dass im Montageabschnitt 14 die Schraube 3 um ihre Gewindeachse 18 gedreht werden kann und im Befestigungsabschnitt 15 der Schraubenkopf 16 an den Schienenlippen 22 und/oder an den Innenseiten 8 der Seitenwände 7 in verspanntem Zustand 60 des Befestigungssystems 1 zur Anlage kommt.

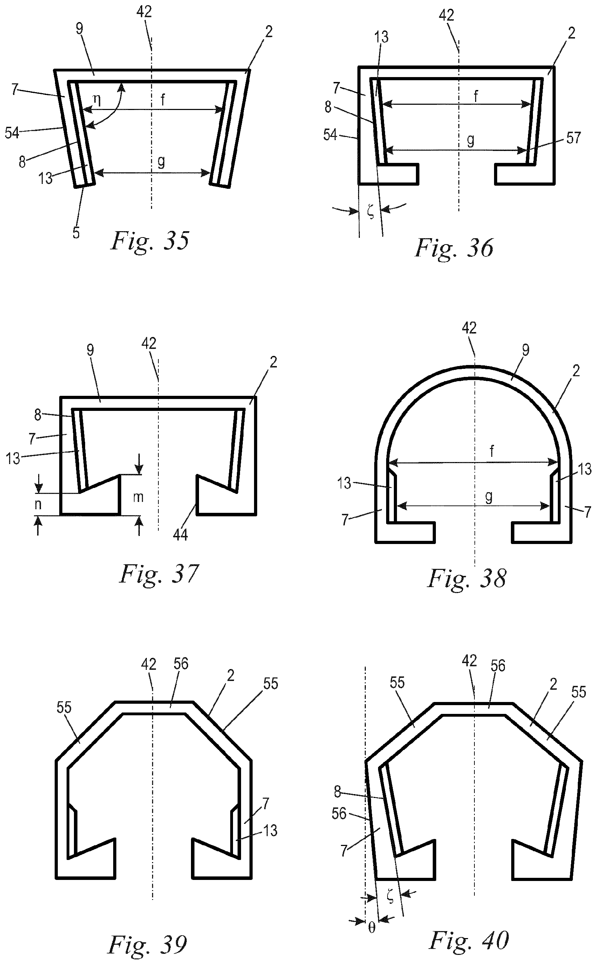

Eine weitere alternative Ausführungsform der Schiene 2 ist in Fig. 35 gezeigt, die keine Schienenlippen 22 besitzt. Die Schiene 2 aus Fig. 35 entspricht ansonsten der Schiene 2 aus Fig. 34. Die Seitenwände 7 verlaufen zueinander geneigt. Die Innenseiten 8 der Seitenwände 7 schließen jeweils mit dem Schienenrücken 9 den Winkel η ein, welcher zur Längsmittelachse 42 hin geöffnet ist. Der Abstand der Innenseiten 8 ist an der dem Schienenrücken 9 abgewandten Seite der Seitenwände 7 kleiner als die Länge c des Schraubenkopfes 16. Dadurch ist der Anschlag 57 zum Verspannen der Schraube 3 an den Innenseiten 8 der Seitenwände 7 der Schiene 2 ausgebildet. Das Eingriffsprofil 13 verläuft über die gesamte Innenseite 8 der Seitenwand 7.

Die alternative Ausführung der Schiene 2 in Fig. 36 unterscheidet sich von der Schiene 2 in Fig. 29 in der Ausbildung der Seitenwand 7. Die Außenseite 54 der Seitenwand 7 verläuft parallel zur Längsmittelebene 42. Die Innenseite 8 ist zur Außenseite 54 geneigt. Die Außenseite 54 und die Innenseite 8 schließen einen Winkel ζ ein, welcher zur Schienenlippe 5 hin geöffnet ist. Der Winkel ζ beträgt im Ausführungsbeispiel von 3° bis 15°, insbesondere von 5° bis 10°. Das Eingriffsprofil 13 erstreckt sich über die gesamte Innenseite 8 der Seitenwand 7. Der Winkel ζ ist so ausgebildet, dass die Breite f des Montageabschnitts 14 so groß ist, dass der Schraubenkopf 16 im Montageabschnitt 14 drehbar ist. In verspanntem Zustand 60 des Befestigungssystems 1 liegt der Schraubenkopf 16 im Befestigungsabschnitt 15 an der Innenseite 8 der Seitenwand 7 oder an den Schienenlippen 22 an. Die Breite g des Befestigungsabschnitts 15 ist so gewählt, dass der Schraubenkopf 16 im Befestigungsabschnitt 15 nicht drehbar ist.

Die alternative Ausführungsvariante nach Fig. 37 unterscheidet sich von der Ausführungsform nach Fig. 36 nur in der Ausgestaltung der dicker werdenden Schienenlippen 22, die auch im Ausführungsbeispiel nach Fig. 31 gezeigt sind.

In Fig. 38 ist ein alternatives Ausführungsbeispiel der Schiene 2 gezeigt, deren Schienenrücken 9 als ein Halbkreisbogen ausgebildet ist. Der Schienenrücken 9 verbindet die Seitenwände 7 in Form eines Halbkreises miteinander. Der Schienenrücken verläuft rund gebogen. Die Eingriffsprofile 13 erstrecken sich nur teilweise über die Innenseite 8 der Seitenwände 7.

In den Figuren 39 und 40 umfasst der Schienenrücken 9 zwei Zwischenwände 55 und eine Rückenwand 56. Ausgehend von den Seitenwänden 7 erstreckt sich jeweils eine Zwischenwand 55 in Richtung Längsmittelachse 42. Die Zwischenwände 55 verlaufen zueinander geneigt. Die Zwischenwände 55 sind an ihren von den Seitenwänden 7 abgewandten Enden über die Rückenwand 56 miteinander verbunden. Der senkrecht zur Längsmittelebene 42 gemessene Abstand der Zwischenwände 55 reduziert sich in Richtung zur Rückenwand 56. Die Seitenwände 7 im Ausführungsbeispiel der Fig. 39 verlaufen zueinander parallel. Das Eingriffsprofil 13 erstreckt sich nur teilweise über die Innenseite 8 der Seitenwand 7. Im Ausführungsbeispiel nach Fig. 40 verlaufen die Innenseite 8 und die Außenseite 54 der Seitenwand 7 zueinander geneigt und schließen den Winkel ζ ein. Der Winkel ζ ist zur Schienenlippe 5 hin geöffnet und beträgt im Ausführungsbeispiel von 2° bis 15°, vorteilhaft von 4° bis 10°. Die Außenseite 56 der Seitenwand 7 verläuft zu einer parallel zur Längsmittelebene 42 verlaufenden Ebene geneigt und schließt mit dieser einen Winkel θ ein. Der Winkel θ beträgt im Ausführungsbeispiel von 2° bis 15°, vorteilhaft von 4° bis 10°.

In den Ausführungsvarianten der Fig. 38 bis 40 ist der Montageabschnitt 14 so gestaltet, dass sich der Schraubenkopf 16 im Montageabschnitt 14 drehen lässt. In verspanntem Zustand 60 des Befestigungssystems 1 liegt der Schraubenkopf 16 im Befestigungsabschnitt 15 an den Innenseiten 8 der Seitenwände 7 und/oder an den Schienenlippen 22 an.

## Patentansprüche

1. Befestigungssystem umfassend eine Schiene (2) und mindestens eine an der Schiene (2) festzulegende Schraube (3) mit einer Gewindeachse (18), wobei die Schiene (2) in Längsrichtung (4) der Schiene (2) verlaufende Seitenwände (7) besitzt, wobei die Seitenwände (7) über einen Schienenrücken (9) miteinander verbunden sind, wobei die Seitenwände (7) und der Schienenrücken (9) mit ihren Innenseiten (8, 10) einen Innenraum (12) der Schiene (2) begrenzen, wobei die Schiene (2) einen Längsschlitz (11) aufweist, über den der Innenraum (12) zugänglich ist, wobei die Schraube (3) einen Kopf (16) aufweist, der zur Anordnung in dem Innenraum (12) der Schiene (2) vorgesehen ist, wobei der Kopf (16) der Schraube (3) in Richtung der Gewindeachse (18) durch eine dem Gewinde (43) abgewandte Kopfoberseite (39) und durch eine Auflageseite (38), von der aus sich das Gewinde (43) der Schraube (3) erstreckt, begrenzt ist, wobei die Auflageseite (38) und die Kopfoberseite (39) über Längsseiten (36) und Stirnseiten (37) des Schraubenkopfes (16) miteinander verbunden sind, wobei die Schiene (2) einen Anschlag (57) bildet, gegen den der Kopf (16) der Schraube (3) verspannbar ist,
**dadurch gekennzeichnet, dass** die Seitenwände (7) an ihrer dem Innenraum (12) zugewandten Innenseite (8) ein Eingriffsprofil (13) aufweisen, und dass der Kopf (16) der Schraube (3) ein erstes Gegenprofil (17) zum Eingriff in das Eingriffsprofil (13) aufweist, wobei jeweils ein erstes Gegenprofil (17) an den Stirnseiten (37) des Schraubenkopfes (16) ausgebildet ist, welches Profilelemente (48) aufweist, deren Elementrichtung parallel zur Gewindeachse (18) verläuft.

2. Befestigungssystem nach Anspruch 1,
**dadurch gekennzeichnet, dass** das Eingriffsprofil (13) durch Profilelemente (19) gebildet ist, deren Elementrichtung in einer Seitenansicht auf die Schiene (2) quer, insbesondere senkrecht zur Längsrichtung (4) der Schiene (2) verläuft.

3. Befestigungssystem nach Anspruch 1 oder 2,
**dadurch gekennzeichnet, dass** das Eingriffsprofil (13) und das erste Gegenprofil (17) als Zahnprofile ausgebildet sind.

4. Befestigungssystem nach einem der Ansprüche 1 bis 3,
**dadurch gekennzeichnet, dass** der Kopf (16) der Schraube (3) eine Breite (a) besitzt, die kleiner als die Breite (e) des Längsschlitzes (11) der Schiene (2) ist, wobei die Breite (a) dem Abstand zweier paralleler Tangentialebenen (41) entspricht, die an Längsseiten (36) des Kopfes (16) anliegen, dass der Kopf(16) eine senkrecht zur Gewindeachse (18) und in montiertem Zustand der Schraube (3) senkrecht zur Längsrichtung (4) der Schiene (2) gemessene Länge (c) besitzt, die größer als die Breite (e) des Längsschlitzes (11) der Schiene (2) ist und dass der Kopf (16) eine parallel zur Gewindeachse (18) gemessene Höhe (d) besitzt.

5. Befestigungssystem nach Anspruch 4,
**dadurch gekennzeichnet, dass** die Schiene (2) einen zu dem Anschlag (57) beabstandeten Montageabschnitt (14) und einen an dem Anschlag (57) anschließenden Befestigungsabschnitt (15) besitzt, und dass die freie Breite (f) des Schieneninnenraums (12) zumindest so groß ist, dass der Kopf (16) der Schraube (3) im Montageabschnitt (14) ausgehend von einer Ausrichtung, in der die Länge (c) des Kopfs (16) parallel zur Breite (e) des Längsschlitzes (11) liegt, um mindestens 45°, insbesondere mindestens 70° um die Gewindeachse (18) gedreht werden kann.

6. Befestigungssystem nach Anspruch 5,
**dadurch gekennzeichnet, dass** eine in Richtung der Gewindeachse (18) in montiertem Zustand der Schraube (3) gemessene Höhe (h) des Montageabschnitts (14) mindestens so groß wie eine in Richtung der Gewindeachse (18) gemessene Höhe (j) des ersten Gegenprofils (17), insbesondere mindestens so groß wie die Höhe (d) des Schraubenkopfes ist,
dass die senkrecht zur Höhe (h) des Montageabschnitts (14) und senkrecht zur Längsrichtung (4) der Schiene (2) gemessene Breite (f) des Schieneninnenraums (12) im Montageabschnitt (14) an jeder Stelle mindestens so groß wie die maximale Länge (b) des Kopfes (16) ist, und dass eine parallel zur Breite (f) des Schieneninnenraums (12) im Montageabschnitt (14) gemessene Breite (g) des Schieneninnenraums (12) im Befestigungsabschnitt (15) kleiner als die Länge (c) des Kopfes (16) ist.

7. Befestigungssystem nach einem der Ansprüche 1 bis 6,
**dadurch gekennzeichnet, dass** die Innenseiten (8) der Seitenwände (7) zumindest in einem Abschnitt zueinander geneigt verlaufen und sich die Breite (f, g) des Innenraums (12) in diesem Abschnitt zum Schienenrücken (9) hin vergrößert.

8. Befestigungssystem nach Anspruch 7,
**dadurch gekennzeichnet, dass** das Eingriffsprofil (13) sich über die gesamte Höhe (k) der Innenseiten (8) der Seitenwände (7) erstreckt.

9. Befestigungssystem nach einem der Ansprüche 1 bis 8,
**dadurch gekennzeichnet, dass** die Eingriffsprofile (13) der sich zugewandten Innenseiten (8) der Seitenwände (7) in Längsrichtung (4) der Schiene (2) zueinander versetzt angeordnet sind, und dass die ersten Gegenprofile (17) der Schraube (3) in montiertem Zustand der Schraube in Längsrichtung (4) der Schiene (2) zueinander versetzt angeordnet sind.

10. Befestigungssystem nach Anspruch 1,
**dadurch gekennzeichnet, dass** die Schiene (2) in Längsrichtung (4) der Schiene (2) verlaufende Schienenlippen (5) aufweist, wobei die Schienenlippen (5) an die Seitenwände (7) anschließen und dem Innenraum (12) zugewandte Innenseiten (6) besitzen.

11. Befestigungssystem nach Anspruch 10,
**dadurch gekennzeichnet, dass** die Schienenlippen (5) an ihrer Innenseite (6) ein Lippenprofil (22) aufweisen, und dass der Kopf (16) der Schraube (3) ein zweites Gegenprofil (23) zum Eingriff in das Lippenprofil (22) aufweist.

12. Befestigungssystem nach Anspruch 11,
**dadurch gekennzeichnet, dass** das Lippenprofil (22) durch Lippenprofilelemente (50) gebildet ist, deren Lippenprofilrichtung in einer Ansicht in Längsrichtung (4) der Schiene (3) zur Gewindeachse (18) der Schraube (3) in montiertem Zustand geneigt verläuft.

13. Befestigungssystem nach einem der Ansprüche 11 oder 12,
**dadurch gekennzeichnet, dass** die Lippenprofile (22) an den Innenseiten (6) der Schienenlippen (5) in Längsrichtung (4) der Schiene (2) zueinander versetzt angeordnet sind, und dass die zweiten Gegenprofile (23) der Schraube (3) in montiertem Zustand der Schraube (3) in Längsrichtung (4) der Schiene (2) zueinander versetzt angeordnet sind.

14. Befestigungssystem nach einem der Ansprüche 10 bis 13,
**dadurch gekennzeichnet, dass** die Schienenlippen (5) dem Innenraum (12) abgewandte Außenseiten (21) aufweisen, dass die Innenseiten (8) der Seitenwände (7) senkrecht zu den Außenseiten (21) der Schienenlippen (5) verlaufen und dass das Eingriffsprofil (13) sich nur über einen Teil der Höhe (k), insbesondere über weniger als 60% der Höhe (k) der Innenseite (8) der Seitenwände (7) erstreckt.

## Claims

1. Fastening system comprising a rail (2) and at least one screw (3) which has a thread axis (18) and which is to be fixed to the rail (2), wherein the rail (2) has side walls (7) extending in the longitudinal direction (4) of the rail (2), the side walls (7) are connected to each other via a rail back (9), the side walls (7) and the rail back (9) delimit an interior (12) of the rail (2) with their inner sides (8, 10), the rail (2) has a longitudinal slot (11) via which the interior (12) is accessible, the screw (3) has a head (16) which is provided to be arranged in the interior (12) of the rail (2), the head (16) of the screw (3) is delimited in the direction of the thread axis (18) by a head upper side (39) facing away from the thread (43) and by a contact side (38), from which the thread (43) of the screw (3) extends, the contact side (38) and the head upper side (39) are connected to each other via longitudinal sides (36) and front sides (37) of the screw head (16), and the rail (2) forms a stop (57), against which the head (16) of the screw (3) can be tightened, **characterized in that** the side walls (7) have an engagement profile (13) on their inner side (8) facing the interior (12), and **in that** the head (16) of the screw (3) has a first mating profile (17) to engage in the engagement profile (13), wherein in each case a first mating profile (17) is formed on the front sides (37) of the screw head (16), and has profile elements (48) of which the element direction extends parallel to the thread axis (18).

2. Fastening system according to Claim 1,
**characterized in that** the engagement profile (13) is formed by profile elements (19) of which the element direction extends transversely, in particular at right angles to the longitudinal direction (4) of the rail (2), in a side view of the rail (2).

3. Fastening system according to Claim 1 or 2,
**characterized in that** the engagement profile (13) and the first mating profile (17) are formed as toothed profiles.

4. Fastening system according to one of Claims 1 to 3,
**characterized in that** the head (16) of the screw (3) has a width (a) which is smaller than the width (e) of the longitudinal slot (11) of the rail (2), wherein the width (a) corresponds to the distance between two parallel tangential planes (41) which rest on longitudinal sides (36) of the head (16), **in that** the head (16) has a length (c), measured at right angles to the thread axis (18) and, in the mounted state of the screw (3), at right angles to the longitudinal direction (4) of the rail (2), which is greater than the width (e) of the longitudinal slot (11) of the rail (2), and **in that** the head (16) has a height (d) measured parallel to the thread axis (18).

5. Fastening system according to Claim 4,
**characterized in that** the rail (2) has a mounting section (14) at a distance from the stop (57) and a fastening section (15) adjoining the stop (57), and **in that** the free width (f) of the rail interior (12) is at least so large that the head (16) of the screw (3) in the mounting section (14), starting from an alignment in which the length (c) of the head (16) lies parallel to the width (e) of the longitudinal slot (11), can be rotated by at least 45°, in particular at least 70°, about the thread axis (18).

6. Fastening system according to Claim 5,
**characterized in that** a height (h) of the mounting section (14), measured in the direction of the thread axis (18) in the mounted state of the screw (3), is at least as large as a height (j) of the first mating profile (17), measured in the direction of the thread axis (18), in particular is at least as large as the height (d) of the screw head,
**in that** the width (f) of the rail interior (12) in the mounting section (14), measured at right angles to the height (h) of the mounting section (14) and at right angles to the longitudinal direction (4) of the rail (2), is at least as large at every point as the maximum length (b) of the head (16), and **in that** a width (g) of the rail interior (12) in the fastening section (15), measured parallel to the width (f) of the rail interior (12) in the mounting section (14), is smaller than the length (c) of the head (16).

7. Fastening system according to one of Claims 1 to 6,
**characterized in that** the inner sides (8) of the side walls (7) extend at an angle to each other, at least in one section, and the width (f, g) of the interior (12) in this section enlarges toward the rail back (9).

8. Fastening system according to Claim 7,
**characterized in that** the engagement profile (13) extends over the entire height (k) of the inner sides (8) of the side walls (7).

9. Fastening system according to one of Claims 1 to 8,
**characterized in that** the engagement profiles (13) of the mutually facing inner sides (8) of the side walls (7) are arranged to be offset relative to one another in the longitudinal direction (4) of the rail (2), and **in that** in the mounted state of the screw, the first mating profiles (17) of the screw (3) are arranged to be offset relative to one another in the longitudinal direction (4) of the rail (2).

10. Fastening system according to Claim 1,
**characterized in that** the rail (2) has rail lips (5) extending in the longitudinal direction (4) of the rail (2), wherein the rail lips (5) adjoin the side walls (7) and have inner sides (6) facing the interior (12).

11. Fastening system according to Claim 10,
**characterized in that** the rail lips (5) have a lip profile (22) on their inner side (6), and **in that** the head (16) of the screw (3) has a second mating profile (23) to engage in the lip profile (22).

12. Fastening system according to Claim 11,
**characterized in that** the lip profile (22) is formed by lip profile elements (50) of which, in the mounted state, the lip profile direction extends at an angle to the thread axis (18) of the screw (3) in a view in the longitudinal direction (4) of the rail (2).

13. Fastening system according to either of Claims 11 or 12,
**characterized in that** the lip profiles (22) on the inner sides (6) of the rail lips (5) are arranged to be offset relative to one another in the longitudinal direction (4) of the rail (2), and **in that**, in the mounted state of the screw (3), the second mating profiles (23) of the screw (3) are arranged to be offset relative to one another in the longitudinal direction (4) of the rail (2).

14. Fastening system according to one of Claims 10 to 13,
**characterized in that** the rail lips (5) have outer sides (21) facing away from the interior (12), **in that** the inner sides (8) of the side walls (7) extend at right angles to the outer sides (21) of the rail lips (5), and **in that** the engagement profile (13) extends only over part of the height (k), in particular over less than 60% of the height (k), of the inner side (8) of the side walls (7).

## Revendications

1. Système de fixation comprenant un rail (2) et au moins une vis (3) à fixer au rail (2) avec un axe de filetage (18), dans lequel le rail (2) possède des parois latérales (7) s'étendant dans la direction longitudinale (4) du rail (2), dans lequel les parois latérales (7) sont reliées entre elles via un dos de rail (9), dans lequel les parois latérales (7) et le dos du rail (9) délimitent ave leurs côtés intérieurs (8, 10) un espace intérieur (12) du rail (2), dans lequel le rail (2) présente une fente longitudinale (11) via laquelle l'espace intérieur (12) est accessible, dans lequel la vis (3) comporte une tête (16) prévue pour son implantation dans l'espace intérieur (12) du rail (2), dans lequel la tête (16) de la vis (3) est délimitée en direction de l'axe de filetage (18) par un côté supérieur de tête (39) opposé au filet (43) et par un côté portant (38) hors duquel le filet (43) de la vis (3) s'étend, dans lequel le côté portant (38) et le côté supérieur de tête (39) sont reliés entre eux via les côtés longitudinaux (36) et les côtés avant (37) de la tête de vis (16), dans lequel le rail (2) forme une butée (57) contre laquelle la tête (16) de la vis (3) peut être serrée ;
**caractérisé en ce que** les parois latérales (7) comportent au niveau de leur côté intérieur (8) orienté vers l'espace intérieur (12) un profilé de mise en prise (13) et que la tête (16) de la vis (3) comporte un premier contre-profilé (17) permettant de réaliser la mise en prise dans le profilé de mise en prise (13), dans lequel respectivement un premier contre-profilé (17) est réalisé au niveau des côtés avant (37) de la tête de vis (16) qui comporte les éléments profilés (48) et dont la direction des éléments s'étend parallèlement à l'axe de filetage (18).

2. Système de fixation selon la revendication 1,
**caractérisé en ce que** le profilé de mise en prise (13) est formé par les éléments profilés (19) dont la direction des éléments dans une vue de côté pratiquée sur le rail (2) s'étend transversalement, notamment perpendiculairement à la direction longitudinale (4) du rail (2).

3. Système de fixation selon la revendication 1 ou 2,
**caractérisé en ce que** le profilé de mise en prise (13) et le premier contre-profilé (17) sont réalisés sous la forme de profilés dentés.

4. Système de fixation selon l'une quelconque des revendications 1 à 3,
**caractérisé en ce que** la tête (16) de la vis (3) présente une largeur (a) qui est plus petite que la largeur (e) de la fente longitudinale (11) du rail (2), dans lequel la largeur (a) correspond à la distance des deux plans tangentiels (41) parallèles butant contre les côtés longitudinaux (36) de la tête (16), que la tête (16) présente une longueur (c) mesurée perpendiculairement à l'axe de filetage (18) et, dans l'état monté de la vis (3), perpendiculairement à la direction longitudinale (4) du rail (2) qui est plus grande que la largeur (e) de la fente longitudinale (11) du rail (2) et que la tête (16) présente une hauteur (d) mesurée parallèlement à l'axe de filetage (18).

5. Système de fixation selon la revendication 4,
**caractérisé en ce que** le rail (2) présente une section de montage (14) placée à une certaine distance de la butée (57) et une section de fixation (15) raccordée à la butée (57) et que la largeur libre (f) de l'espace intérieur de rail (12) est au moins aussi grande que la tête (16) de la vis (3) dans la section de montage (14) si l'on part d'une orientation dans laquelle la longueur (c) de la tête (16) s'étend parallèlement à la largeur (e) de la fente longitudinale (11), pour pouvoir pivoter d'au moins 45°, notamment d'au moins 70° autour de l'axe de filetage (18).

6. Système de fixation selon la revendication 5,
**caractérisé en ce que**, une hauteur (h) de la section de montage (14) mesurée en direction de l'axe de filetage (18) à l'état monté de la vis (3) est au moins aussi grande qu'une hauteur (j) du premier contre-profilé (17) mesurée en direction de l'axe de filetage (18), notamment au moins aussi grande que la hauteur (d) de la tête de vis,
la largeur (f) de l'espace intérieur de rail (12) mesurée perpendiculairement à la hauteur (h) de la section de montage (14) et perpendiculairement à la direction longitudinale (4) du rail (2) est, dans la section de montage (14), à chaque emplacement, au moins aussi grande que la longueur (b) maximale de la tête (16) et qu'une largeur (g) de l'espace intérieur de rail (12) mesurée parallèlement à la largeur (f) de l'espace intérieur de rail (12) est plus petite, dans la section de montage (14), dans la section de fixation (15), que la longueur (c) de la tête (16).

7. Système de fixation selon l'une quelconque des revendications 1 à 6,
**caractérisé en ce que** les côtés intérieurs (8) des parois latérales (7) s'étendent au moins de façon inclinée les uns par rapport aux autres dans une section et que la largeur (f, g) de l'espace intérieur (12) s'agrandit dans cette section en direction du dos du rail (9).

8. Système de fixation selon la revendication 7,
**caractérisé en ce que** le profilé de mise en prise (13) s'étend sur la totalité de la hauteur (k) des côtés intérieurs (8) des parois latérales (7).

9. Système de fixation selon l'une quelconque des revendications 1 à 8,
**caractérisé en ce que** les profilés de mise en prise (13) des côtés intérieurs (8) orientés vers eux des parois latérales (7) sont disposés de façon décalée les uns par rapport aux autres dans la direction longitudinale (4) du rail (2) et que les premiers contre-profilés (17) de la vis (3) sont disposés de façon décalée les uns par rapport aux autres à l'état monté de la vis dans la direction longitudinale (4) du rail (2).

10. Système de fixation selon la revendication 1,
**caractérisé en ce que** le rail (2) comporte des lèvres de rail (5) s'étendant dans la direction longitudinale (4) du rail (2), dans lequel les lèvres de rail (5) sont raccordées au niveau des parois latérales (7) et possèdent des côtés intérieurs (6) orientés vers l'espace intérieur (12).

11. Système de fixation selon la revendication 10,
**caractérisé en ce que** les lèvres de rail (5) comportent un profilé de lèvre (22) au niveau de leur côté intérieur (6) et que la tête (16) de la vis (3) comporte un deuxième contre-profilé (23) pour la mise en prise dans le profilé de lèvre (22).

12. Système de fixation selon la revendication 11,
**caractérisé en ce que** le profilé de lèvre (22) est formé par des éléments profilés de lèvre (50) dont la direction de profilé de lèvre s'étend de façon inclinée à l'état monté dans une vue pratiquée dans la direction longitudinale (4) du rail (2) par rapport à l'axe de filetage (18) de la vis (3).

13. Système de fixation selon l'une quelconque des revendications 11 ou 12,
**caractérisé en ce que** les profilés de lèvre (22) sont disposés de façon décalée les uns par rapport aux autres au niveau des côtés intérieurs (6) des lèvres de rail (5) dans la direction longitudinale (4) du rail (2) et que les deuxièmes contre-profilés (23) de la vis (3) sont disposés de façon décalée les uns par rapport aux autres à l'état monté de la vis (3) dans la direction longitudinale (4) du rail (2).

14. Système de fixation selon l'une quelconque des revendications 10 à 13,
**caractérisé en ce que** les lèvres de rail (5) comportent des côtés extérieurs (21) opposés à l'espace intérieur (12), que les côtés intérieurs (8) des parois latérales (7) s'étendent perpendiculairement aux côtés extérieurs (21) des lèvres de rail (5) et que le profilé de mise en prise (13) s'étend seulement sur une partie de la hauteur (k), notamment sur moins de 60 % de la hauteur (k) du côté intérieur (8) des parois latérales (7).
